(19) **Europäisches Patentamt**
**European Patent Office**
**Office européen des brevets**

(11) **EP 1 864 375 B1**

(12) **EUROPÄISCHE PATENTSCHRIFT**

(45) Veröffentlichungstag und Bekanntmachung des Hinweises auf die Patenterteilung:
**25.06.2008 Patentblatt 2008/26**

(21) Anmeldenummer: **06708741.1**

(22) Anmeldetag: **13.03.2006**

(51) Int Cl.:
**H02P 1/00** *(2006.01)*

(86) Internationale Anmeldenummer:
**PCT/EP2006/060657**

(87) Internationale Veröffentlichungsnummer:
**WO 2006/103159 (05.10.2006 Gazette 2006/40)**

(54) **GENERATOR MIT HOHER PHASENORDNUNG**

HIGH-PHASE ORDER GENERATOR

GENERATEUR A ORDRE DE PHASE ELEVE

(84) Benannte Vertragsstaaten:
**CH DE FR GB IT LI SE**

(30) Priorität: **31.03.2005 CH 586052005**

(43) Veröffentlichungstag der Anmeldung:
**12.12.2007 Patentblatt 2007/50**

(73) Patentinhaber: **Alstom Technology Ltd**
**5400 Baden (CH)**

(72) Erfinder: **LACAZE, Alain**
**F-90850 Essert (FR)**

(56) Entgegenhaltungen:
**US-A- 4 439 823**   **US-A- 4 642 751**
**US-A- 4 751 448**   **US-A- 5 028 804**
**US-A- 5 053 689**   **US-A1- 2002 093 840**
**US-A1- 2003 085 627**

1        **EP 1 864 375 B1**        2

**Beschreibung**

TECHNISCHES GEBIET

Die vorliegende Erfindung bezieht sich auf das Gebiet der Ausrüstung für Generatoren mit hoher Phasenordnung. Insbesondere bezieht sie sich auf die Leistungserzeugung mit einem Synchron-Generator, welcher über einen statischen Frequenz-Konverter Leistung abgibt, und welcher eine von der Netzfrequenz unterschiedliche Frequenz erzeugt.

Die vorliegende Erfindung bezieht sich im speziellen auf eine Vorrichtung zur Erzeugung von elektrischer Leistung aus mechanischer Leistung, umfassend einen Generator zur Umwandlung von mechanischer Leistung in Mehrphasen-Wechselstrom und einen Matrix Konverter für die Umwandlung des Mehrphasen-Wechselstroms in den gewünschten Ausgangs-Wechselstrom. Des weiteren bezieht sich die Erfindung auf ein Verfahren zum Betrieb einer solchen Vorrichtung.

HINTERGRUND DER ERFINDUNG

Im Bereich der Stromerzeugung ist für eine spezifizierte Ausgangsleistung eine Zunahme der Umdrehungsgeschwindigkeit der Turbine verbunden mit einer Reduktion sowohl der Grösse als auch der Kosten. Ausserdem kann die Effizienz verbessert werden. Bereits sind Stormerzeugungs-Generatorturbinen mit Leistungen von bis zu 70 MW mit Generatoren verbunden unter Zuhilfenahme von Getriebeanordnungen, um einen Betrieb bei höherer Umdrehungsgeschwindigkeit der Turbine zu erlauben. Nimmt die Ausgangsleistung zu, wird aber die Verwendung von Getriebeanordnungen aus Zuverlässigkeitsgründen zunehmend schwierig. In derartigen Fällen wird die Turbine bei synchroner Geschwindigkeit betrieben.

Die Verwendung von statischen Frequenz-Konvertern (Leistungselektronik) stellt eine Alternative dar. Unter anderem können die folgenden Vorteile erwartet werden: reduzierte Kosten des Generators in Übereinstimmung mit einem konstanten Produkt von Volumen und Umdrehungsgeschwindigkeit, standardisierte Generatoren für sowohl 50 Hz als auch 60 Hz, eine einstellbare Geschwindigkeit, welche die Wiederherstellung der Teillast-Effizienz der Turbine erlaubt, eine wesentliche Lärmreduktion, saubere (ölfreie) Kühlung, etc..

Sowohl im Falle der Energieerzeugung als auch im Falle von Antrieben würde die Reduktion der Verluste von statischen Frequenz-Konvertern wesentliche Kosteneinsparungen bringen. Eine Reduktion der Verluste hätte vor allem einen Einfluss auf die Investitions-Kosten, da die Kühlung normalerweise für einen wesentlichen Teil der Gesamtkosten eines Konverters verantwortlich ist.

Statische Frequenz-Konverter existieren sowohl mit AC/DC/AC-Wandlung als auch mit direkter AC/AC-Wandlung.

Die indirekte Konversion (AC/DC/AC) wird durch die Erzeugung eines gerichteten Gleichstroms oder einer gerichteten Gleichspannung aus der Dreiphasen-Quelle (Netz im Fall von Motoren; Generator im Falle von Strom-Erzeugung) bewirkt. Anschliessend wird der Gleichstrom oder die Gleichspannung in einen Wechselstrom unter Verwendung eines Inverters zurückgewandelt. Eine Induktanz (Stromwandler) oder eine Kondensatorbank (Spannungswandler) werden in den dazwischenliegenden Kreis verbunden um die Welligkeits-Komponenten (ripples) des Stroms oder die Spitzen (spikes) zu reduzieren.

Heutzutage machen die grossen Konverter Gebrauch von Thyristoren. Wenn natürliche Kommutierung der Thyristoren möglich ist, werden die Verluste in den Konvertern reduziert. Spannungs-Konverter verwenden GTOs mit deren inhärent hohen Schaltverlusten sowie auch IGBTs oder IGCTs. Die Auslegungsleistung der individuellen Komponenten ist niedriger als jene von Thyristoren, und entsprechend ist für eine spezifische Spannung und für einen spezifischen Strom eine grössere Anzahl von Komponenten erforderlich. Spannungs-Konverter können von der Verwendung von Pulsweiten-Modulationstechniken profitieren, welche die Form der Spannungskurven verbessern und die Harmonischen reduzieren. Je höher die Schaltfrequenzen sind, desto besser ist es, abgesehen von Verlusten und dielektrischer Ermüdung. Der Strom kann im wesentlichen sinusförmig erzeugt werden, so dass eine Lastminderung der Leistung der elektrischen Maschine vermieden wird.

Direkte Wandlung (AC/AC) ist beispielsweise unter Verwendung von sogenannten Cyclo-Konvertern möglich. Die direkte Wandlung weist aus Sicht elektrischer Maschinen wesentliche Vorteile auf, weil der Strom eher eine sinusförmige Welle als ein zerstückelter Gleichstrom ist. Dies reduziert die Verluste, welche zusätzlich innerhalb der elektrischen Maschine auftreten und es verhindert auch pulsierende Torsionen.

Dennoch beschränkt sich die Verwendung von Cyclo-Konvertern mit drei Phasen auf den möglichen Frequenzbereich von 0-1/3 der Eingangsfrequenz. Ein drei Phasen Cyclo-Konverter ist aus drei Einzelphasen-Cyclo-Konvertern aufgebaut, wobei bei ausgewogener Betriebsweise jeder ein Drittel der Leistung verarbeitet. Eine Überschreitung der 1/3 Grenze im Frequenzverhältnis hat eine stark unausgeglichene Betriebsweise zur Folge. In diesem Fall sollte jeder Einzelphasen-Cyclo-Konverter für mehr als 1/3 der vollen Leistung ausgelegt werden. Die Überdimensionierung kann bis zu einem Faktor 3 in der Leistungsauslegung betragen. Eine andere Möglichkeit der direkten Wandlung wird durch sogenannte Matrix-Konverter zur Verfügung gestellt, in welchen jede Phase einer Mehrphasen-Quelle (Generator oder Netz) mit jeder Phase einer Mehrphasenlast (Netz, passive Last, Motor etc.) über einen bidirektionalen Schalter verbunden oder verbindbar ist. Die Schalter bestehen aus einer entsprechenden Anzahl von Thyristoren um den differenziellen Spannungen zwischen den Phasen und den Phasenströmen standzuhalten, und um eine

2

Stromumkehr zu ermöglichen. Sie können als wahrhaft bidirektionale Komponenten betrachtet werden, mit den Möglichkeiten, gleichzeitig zusätzliche Verkabelungen wie Beschaltungs-Elemente (snubbers) oder die Stromversorgung für die Treiberpulse für die antiparallelen Komponenten vorzusehen.

Die Schalter sind in einer (m x n) Matrix angeordnet bei m Phasen der Quelle und n Phasen der Last. Dies stellt die Option zur Verfügung, jede gewünschte Verbindung zwischen den Eingangsphasen und den Ausgangsphasen herzustellen. Dennoch ergibt sich gleichzeitig der Nachteil, dass gewisse Schaltzustände der Matrix nicht erlaubt sein dürfen, da anderenfalls beispielsweise ein Kurzschluss resultieren würde. Weiterhin ist es erwünscht, die Kommutierung von einer Phase auf eine andere Phase derart durchzuführen, dass der niedrigst mögliche Schaltverlust resultiert.

Die US A 5,594,636 beschreibt einen Matrix-Konverter und ein Verfahren zu seinem Betrieb, in welchem die Kommutierung zwischen den Phasen teilweise als natürliche Kommutierung durchgeführt wird, mit einer erzwungenen Kommutierung dort, wo die natürliche Kommutierung nicht möglich ist. Obwohl mit dieser Art der Auswahl Schaltverluste durch die natürliche Kommutierung reduziert werden, verbleiben dennoch die Schaltverluste, welche aufgrund der erzwungenen Kommutierung zu Stande kommen. Weiterhin macht die mögliche erzwungene Kommutierung bei allen Positionen der Matrix die Anwesenheit von Komponenten, welche ausgeschaltet werden können, erforderlich. Dies erhöht den Schaltaufwand erheblich.

Dennoch ist es möglich, einen Matrix-Konverter in einer Art und Weise zu betreiben, dass nur natürliche Kommutierungen verwendet werden. Dies kann erreicht werden, indem das Umschalten von einer ausgewählten verbundenen Phase des Generators zu einer ausgewählten nicht verbundenen Phase des Generators nur erlaubt wird, wenn bestimmte Bedingungen erfüllt sind. Ein solcher Matrix-Konverter sowie auch seine Betriebsweise sind in der DE 100 51 222 A1 sowie in der korrespondierenden europäischen Anmeldung EP-A-1 199 794 offenbart. Obwohl dieses Konzept eines Matrix-Konverters sowie seine Betriebsweise von hoher Effizienz und Vielseitigkeit ist, so leidet es doch für bestimmte Anwendungen an Schwächen in Bezug auf harmonische Verzerrung und in Bezug auf mögliche Frequenz-Verhältnisse. Weiter ist ein Generator für die Unwandlung von mechanischer Leistung in einer Mehrphasen-Wechselstrom aus US-A-5,053,689 bekannt.

ZUSAMMENFASSUNG DER ERFINDUNG

Die der vorliegenden Erfindung zugrunde liegende Aufgabe besteht entsprechend darin, eine verbesserte Vorrichtung zur Erzeugung elektrischer Leistung aus mechanischer Leistung zur Verfügung zu stellen, umfassend einen Generator mit einem Rotor und einem Stator für die Umwandlung von mechanischer Leistung in einen Mehrphasen-Wechselstrom, vorzugsweise umfassend einen statischen Frequenz-Konverter, wie z.B. einen Matrix-Konverter, für die Wandlung des Mehrphasen-Wechselstroms in den gewünschten Ausgangs-Wechselstrom, sowie auch eine verbesserte Betriebsweise einer solchen Vorrichtung zur Verfügung zu stellen.

Die vorliegende Erfindung löst die obengenannte Aufgabe dadurch, dass ein Generator-Aufbau vorgeschlagen wird, bei welchem der Stator einen Statorkern mit einer darin vorgesehenen zylindrischen Statorbohrung umfasst, wobei der genannte Statorkern eine Vielzahl von parallelen, beabstandeten Statorschlitzen aufweist, welche sich axial entlang der Länge des genannten Statorkerns erstrecken und welche sich zur genannten Statorbohrung hin öffnen, wobei eine Vielzahl von Statorwicklungsstäben in die Statorschlitze eingeführt sind. In einem solchen Stator sind die Wicklungen derart verbunden, dass die Phasen des Mehrphasen-Wechselstroms Delta-verbunden sind und der Mehrphasen-Wechselstrom mehr als drei Phasen hat.

Ein Merkmal der Erfindung ist entsprechend die Tatsache, dass durch Verwendung eines sogenannten Generators mit hoher Phasenordnung und durch die entsprechend hohe Anzahl von Phasen des Mehrphasen-Wechselstroms die harmonischen Verzerrungen erheblich reduziert werden können. Weil die Wicklungen aus Stäben bestehen, ist die Konstruktion sehr einfach und robust, da die Verbindungspunkte der Ausgangsphasen des Stators aus den Endverbindungen der Stäbe der Wicklung auf beiden Seiten des Stators gewählt werden können. Die Hauptargumente, welche zur Optimierung der Anzahl der Phasen des Mehrphasenausgangsstroms in Betracht gezogen werden sollten, sind folgende:

- Die Anzahl der Phasen sollte vorzugsweise ein Vielfaches von 3 sein, sonst sind die Ströme und Spannungen permanent unausgewogen.
- Eine hohe Anzahl von Phasen des Mehrphasen-Wechselstroms führt zu einer hohen Kommutierungsfrequenz.
- Eine hohe Kommutierungsfrequenz reduziert die harmonische Verzerrung.
- Die Kommutierungsfrequenz ist aufgrund der Zeitdauer der Kommutierungen eingeschränkt.
- Die gesamte Anzahl von Schaltern ist proportional zur Anzahl der Phasen. Die Gesamtkosten des Konverters hängen direkt davon ab.
- Eine grosse Anzahl von Phasen bedeutet einen sehr niedrigen Betriebszyklus in der m-Phasenquelle. Die Ausnutzung des Generators ist dann ziemlich schlecht und seine Kosten ziemlich hoch.

Dementsprechend ist die dem Stand der Technik (welcher aber stemverbunden ist) entsprechende Verwendung der 6 Phasen des Mehrphasen-Wechselstroms, welcher leicht erhalten werden kann (Transformator mit Doppelwicklung, 6-Phasen-Generator), häufig zufriedenstellend. Wenn aber harmonische Verzerrungen reduziert werden sollen, ist eine höhere Anzahl von Phasen offenbar überlegen. Die hier beschriebene Lösung beinhaltet das Anzapfen der Stabwicklungen von Delta-verbundenen Phasen und zielt darauf ab, eine attraktive Lösung dadurch zur Verfügung zu stellen, dass die Anzahl der Phasen hoch wird, z.B. 18, 24, 36 oder mehr. Tatsächlich kann die Lösung bei jeder Anzahl von Phasen bis zur Anzahl der Schlitze angewandt werden, oder sogar bis zur Anzahl der Stäbe.

Normalerweise sind Wechselstrom-Generatoren sternverbunden. Für Generatoren mit hoher Phasenordnung und einer aus Stäben aufgebauten Wicklung erweist es sich jedoch als vorteilhaft, Delta-verbundene Statorwicklungen zu verwenden. Der Delta-verbundene Stator impliziert automatisch eine sogenannte polygonale Statorwicklung. In einer polygonalen Statorwicklung sind die einzelnen Wicklungen in angemessener Form in Reihe verbunden, wobei aufeinanderfolgende Verbindungspunkte der Stäbe m Scheitel oder Evolventen ausbilden, wobei theoretisch eine m-Phasenwicklung definiert wird, welche mit dem Eingang des vorzugsweise verwendeten Matrix-Konverters verbunden ist. Demnach können Standard-Statoren von Generatoren modifiziert werden, um entsprechend der Erfindung betrieben zu werden. Das kann erreicht werden, indem die externen Wicklungsverbindungen überbrückt und die Eingänge des Matrix-Konverters mit den Endverbindungen der Stäbe verbunden werden. Um einen 3-Phasen sternverbundenen Stator in einen Mehrphasen Delta-verbundenen oder polygonalen Stator umzubauen, werden die die Wicklungen mit den Anschlussklemmen verbindenden umlaufenden Ringe entfernt und die Enden der Stäbe, welche mit den umlaufenden Ringen verbunden waren, werden zusammengeschweisst. Die Statorwicklung wird entsprechend voll symmetrisch und bildet eine einzige geschlossene Spule.

Bei Leistungserzeugung hat der gewünschte Wechselstromausgang am Ausgang des Konverters normalerweise 1, 2, 3 oder 6 Phasen. Entsprechend der Erfindung hat der Mehrphasen-Stator des Generators vorzugsweise mehr als 8 Phasen, wobei die Zahl der Phasen des Mehrphasen-Stators vorzugsweise ein Vielfaches von 3 ist. Vorzugsweise hat der Mehrphasen-Stator 9, 12, 15, 18, 21 oder 24 Phasen. Aber auch eine grössere Anzahl wie 36, 54 oder 108 Phasen sind möglich, welche zwar die Anzahl der notwendigen Schaltelemente im Matrix-Konverter erhöhen, aber auch die harmonischen Verzerrungen reduzieren und die Vielseitigkeit in Bezug auf das Frequenzverhältnis erhöhen. Im Prinzip kann die Anzahl der Phasen des Mehrphasen-Stators sogar gleich der Anzahl der Statorschlitze sein.

Entsprechend einer anderen Ausführungsform werden im Matrix-Konverter m Phasen des Mehrphasen-Wechselstroms des Generators in Ausgangswechselstrom mit n (n < m) Phasen eines Netzes oder einer Last konvertiert, unter Zuhilfenahme einer Mehrzahl von steuerbaren bidirektionalen Schaltern, welche in einer (m x n) Matrix angeordnet sind, so dass jede der m Phasen des Mehrphasen-Wechselstroms mit jeder der n Phasen des Ausgangs-Wechselstroms über wenigstens einen bidirektionalen Schalter verbunden ist. Typischerweise werden die bidirektionalen Schalter in diesem Fall durch ein Kontrollsystem gesteuert, wobei dieses in ausgewählter Weise die m Eingänge mit n Ausgängen verbindet, wobei erste Mittel zur Bestimmung der Vorzeichen der Ströme in den Eingängen, und zweite Mittel für die Bestimmung der Vorzeichen der Spannungen zwischen den Eingängen vorgesehen sind, und wobei die ersten und die zweiten Mittel in aktiver Verbindung mit dem Kontrollsystem sind. Die bidirektionalen Schalter sind mit dem Kontrollsystem wie üblich über eine Signalverbindung verbunden, mittels der Informationen zum Schaltzustand der Schalter an das Kontrollsystem übermittelt werden. Die bidirektionalen Schalter können antiparallel geschaltete Thyristoren umfassen.

Insbesondere im Falle einer sehr grossen Anzahl von Phasen des Mehrphasen-Wechselstroms des Generators erweist es sich als vorteilhaft, die Leistungselektronik in den Stator zu integrieren. Der Matrix-Konverter kann dementsprechend wenigstens teilweise in den Stator des Generators integriert werden oder ist direkt an den Generator angebaut. Vorzugsweise ist der in den Stator integrierte Teil des Matrix-Konverters sogar in der Strömung des zur Kühlung des Generators verwendeten Kühlmittels angeordnet.

Zusätzlich bezieht sich die vorliegende Erfindung auf ein Verfahren zum Betrieb einer oben beschriebenen Vorrichtung, d.h. eines m Phasen-Generators, welcher ein n Phasen-Netz/Last versorgt. Die Vorrichtung weist einen Matrix Konverter auf, in welchem m Phasen des Mehrphasen-Wechselstroms des Generators, durch alternatives Verbinden dieser Phasen über eine Vielzahl von steuerbaren bidirektionalen, in einer (m x n) Matrix angeordneten Schaltern, zu einem Wechselstrom mit n (n < m) Phasen konvertiert werden, und wird betrieben, indem n Phasen des Generators immer mit der Last verbunden sind, während (m-n) Phasen des Generators nicht mit der Last verbunden sind. Die Vorrichtung ist dadurch gekennzeichnet, dass ein Umschalten von einer ausgewählten verbundenen Phase des Generators auf eine ausgewählte nicht verbundene Phase des Generators nur dann stattfindet, wenn die Bedingungen, wie sie im Dokument DE 100 51 222 A1 sowie in der korrespondierenden europäischen Anmeldung EP-A-1 199 794 angeführt sind, erfüllt sind. Was die Betriebsweise des Matrix-Konverters betrifft, welcher einen Teil der Vorrichtung entsprechend der Erfindung bildet, wird die Offenbarung dieser beiden Dokumente ausdrücklich in die vorliegende Beschreibung eingeschlossen.

Des weiteren bezieht sich die vorliegende Erfindung auf ein Verfahren zur Modifikation oder zum Repowering eines sternverbundenen Stators mit niedriger Phasenordnung. Das Verfahren ist dadurch gekennzeichnet, dass der sternverbundene Stator unter Verwendung der folgenden Schritte:

- Verbindung der externen Wicklungsverbindungen des Stators und
- Verwendung einer Auswahl oder aller Stabverbindungen als Anschlussklemmen des Mehrphasen-Stators

modifiziert wird, wobei dieser Stator einen Statorkern mit einer zylindrischen Statorbohrung umfasst, wobei der Statorkern eine Vielzahl von beabstandeten parallelen Statorschlitzen aufweist, welche sich axial entlang der Länge des genannten Statorkerns erstrecken und sich zu dieser Statorbohrung hin öffnen, und wobei eine Vielzahl von Statorwicklungsstäben in diese Statorschlitze eingeführt sind.

Vorzugsweise sind Sätze von bidirektionalen Schaltern, welche einen Matrix-Konverter bilden, direkt mit den ausgewählten Stabverbindungen verbunden. Wenn der Stator k Statorschlitze aufweist, und der Mehrphasen-Stator m Phasen aufweist, ist vorzugsweise jede k/m-te Evolvente unter Ausbildung einer Phase der Anschlussklemmen des Mehrphasen-Stators verbunden. Die umlaufenden Ringe, welche die Wicklungen mit den Anschlussklemmen verbinden, können einfach entfernt werden und die Enden der Stäbe, welche mit den umlaufenden Ringen verbunden waren, können miteinander verschweisst werden.

Weitere Ausführungsformen der vorliegenden Erfindung sind in den abhängigen Ansprüchen beschrieben.

KURZE BESCHREIBUNG DER FIGUREN

In den beiliegenden Figuren werden bevorzugte Ausführungsbeispiele der Erfindung dargestellt, wobei:

Figur 1    eine schematische Darstellung eines Generators mit einem Matrix-Konverter nach dem Stand der Technik ist;

Figur 2    a) eine schematische Darstellung eines Generators mit hoher Phasenordnung mit Matrix-Konverter entsprechend der Erfindung ist, und
b) dieselbe Konnektivität unter Verwendung einer anderen Darstellungsweise zeigt, welche den polygonalen Charakter visualisiert;

Figur 3    a) eine schematische Konnektivität eines 3-Phasen-Stators mit sternverbundenen Statorwicklungen nach dem Stand der Technik mit 54 Schlitzen darstellt; b) eine schematische Konnektivität eines Stators mit deltaverbundenen Statorwicklungen einschliesslich eines Satzes von bidirektionalen Schaltern, welche direkt mit den Evolventen verbunden sind; c) eine schematische perspektivische Ansicht der Endregion eines Stators mit zwei Wicklungsstäben pro Statorschlitz darstellt; und

Figur 4    das theoretische Frequenzspektrum des Ausgangswechselstroms des Matrix-Konverters für einen 6-Phasen-Generator darstellt, d.h. für Mehrphasen-Wechselstrom mit 6 Phasen (a) und für einen 18-Phasen-Generator, d.h. für Mehrphasen-Wechselstrom mit 18 Phasen (b).

DETAILLIERTE BESCHREIBUNG DER ERFINDUNG

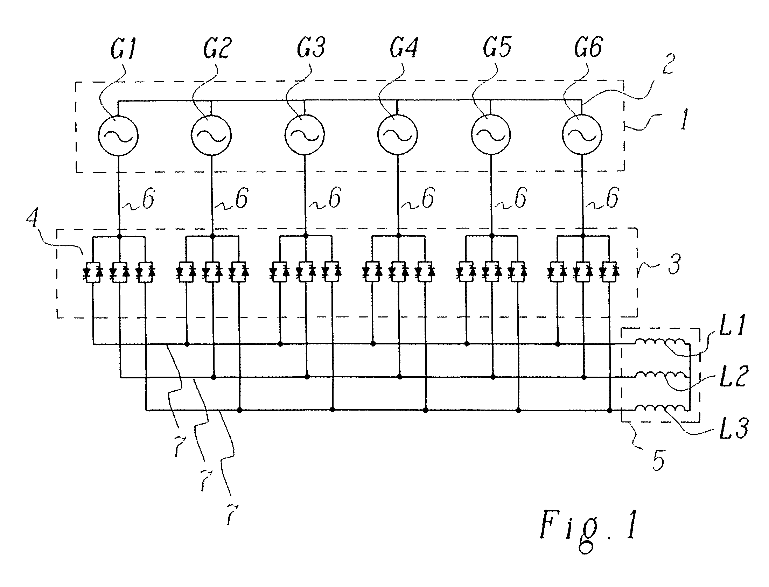

Mit Bezug auf die Zeichnungen, welche dazu dienen sollen, die vorliegenden Ausführungsbeispiele zu illustrieren und nicht dazu, dieselben einzuschränken, zeigt Figur 1 einen Generatoraufbau, in welchem ein Generator 1 mit sechs sternverbundenen (Bezugszeichen 2) Generatorphasen G1 bis G6 mit einem Matrix-Konverter 3 verbunden ist. Ein Mehrphasen-Wechselstrom 6 mit sechs Phasen (m=6) bildet entsprechend den Eingang für den Matrix-Konverter 3. Jede dieser Phasen ist individuell über einen bidirektionalen Schalter 4 mit einer beliebigen der drei Ausgangs-Wechselstrom-Phasen 7 verbunden (n = 3). Diese Anordnung der bidirektionalen Schalter 4 führt zu einer 6 x 3 Matrix von Schaltern, oder allgemeiner, für m Phasen des Mehrphasen-Wechselstroms 6 und für n Phasen des Ausgangs-Wechselstroms 7 umfasst der Matrix-Konverter eine m x n Matrix von bidirektionalen Schaltern 4. Bei Verwendung entsprechender Steuerungsmittel ist es somit möglich, in Abhängigkeit des gewünschten Ausgangsmusters für den Ausgangswechselstrom 7, zu jedem Zeitpunkt jede beliebige Eingangsphase mit jeder beliebigen Ausgangsphase zu verbinden. Der Ausgangswechselstrom 7 ist wie üblich über einen Transformator 5 mit einem Netz (Phasen L1,...,L3) verbunden.

Ein Matrix-Konverter nach Figur 1 und eine bevorzugte Betriebsweise eines solchen Matrix-Konverters ist in der DE 100 51 222 A1 sowie in der korrespondierenden europäischen Anmeldung EP-A-1 199 794 beschrieben.

Für viele Belange, wie beispielsweise harmonische Verzerrung oder Frequenzverhältnis ist es bevorzugt, viele Phasen zu verwenden, d.h. viel mehr als 6. Eine grosse Anzahl von Phasen kann aber in einer schlechten Ausnutzung sowohl der Statorwicklungen als auch der Leistungsschalter resultieren.

Es gibt einen Weg, um dieses Problem der schlechten Ausnutzung zu umgehen, welcher darin besteht, einen polygonalen Stator in Betracht zu ziehen. Eine polygonale Wicklung kann einfach erhalten werden, indem die externen Wicklungsverbindungen verbunden werden (kurzschliessen). Dies ist einfach möglich aufgrund der Tatsache, dass eine Stator-Konstruktion verwendet wird, in welcher die Wicklungen Stabwicklungen sind, und in welcher die Evolventen, welche in einer derartigen Konstruktion vorhanden sind, für den Anschluss der Schalter zur Verfügung stehen. Die Evolventen nehmen in diesem Fall beispielsweise eine Form an, wie sie in der DE-A-31 23 800, oder wie in der DE 26 30 171 offenbart sind, oder wie in Fig. 1b der US 5,789,840. Dann können die Schalter einfach mit den äussersten Abschnitten der Evolventen verbunden werden. Im Prinzip kann die Anzahl der Phasen so hoch sein wie die Anzahl der Statorschlitze (d.h. mehrere zehn). Wenn beispielsweise in jedem der Statorschlitze zwei Wicklungsstäbe angeordnet sind, ist es im Prinzip sogar möglich, eine Anzahl von Phasen zu haben, welche doppelt so hoch ist wie die Anzahl Statorschlitze.

Es muss dabei bemerkt werden, dass es auch möglich ist, einen Mehrphasen-Transformator zu verwenden, welcher bei der Leistungserzeugung mittels eines Generators mit hoher Phasenordnung beispielsweise einen 6-Phasen-Ausgang des Matrix-Konverters mit einem 3-Phasen-Netz oder Last verbindet.

Der Matrix-Konverter könnte im Normalfall mit einem 3-Phasen-Netz, Last oder Versorgungsnetz dementsprechend entweder m x 3 oder m x 6 Phasen aufweisen. Wenn eine 3-Phasen-Verbindung, d.h. ein m x 3 Matrix-Konverter, verwendet wird, dann wird die effektive elektromotorische Kraft reduziert (der Wicklungs-Koeffizient wird reduziert). Die spezifische Ausgangsleistung wird leicht reduziert und der Generator sollte etwas darüber ausgelegt werden (ca. 15%).

Wenn ein 6-Phasen-Ausgang verwendet wird, dann ist die Ausgangsleistung exakt gleich wie mit der Original-Wicklung. Der Nachteil liegt nun bei den Sammelschienen und beim Haupttransformator. Ein spezielles Design von Sammelschienen wird die zusätzlichen Kosten wesentlich reduzieren. Die zusätzlichen Kosten beim Aufwärts-Transformator für eine Doppelwicklung sind marginal. Ein 6-Phasen-Ausgang ist sehr attraktiv, wenn der Leitungsstrom gross ist und die Auslegung des Thyristors überschreitet.

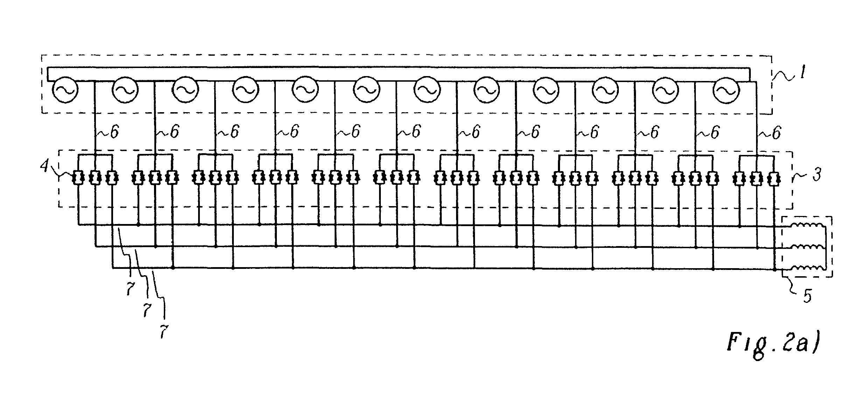

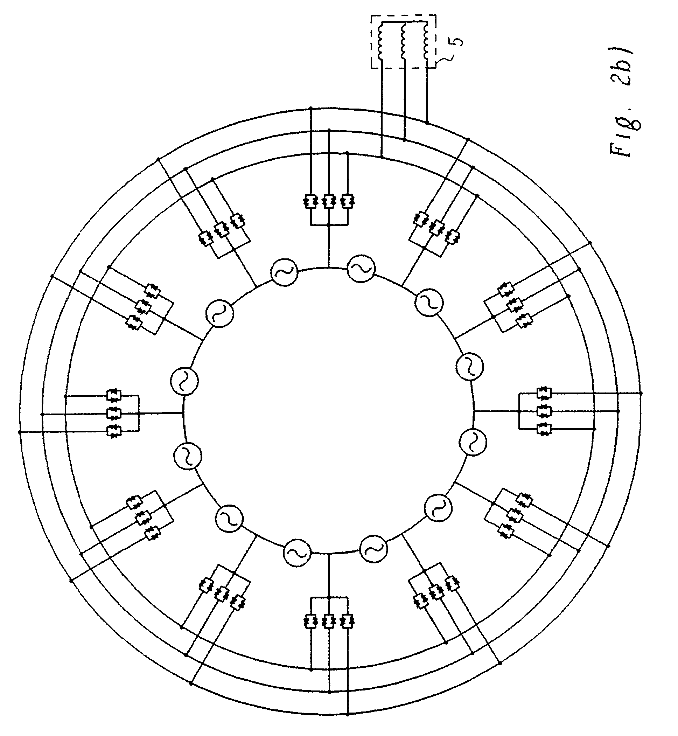

Figur 2 zeigt entsprechend einen möglichen Aufbau mit einem Generator 1 mit hoher Phasenordnung mit 12 Phasen. Das Ausführungsbeispiel wie hier beschrieben zielt darauf ab, eine attraktive Lösung zur Verfügung zu stellen, wenn die Anzahl der Phasen gross wird, d.h. 24, 36 oder mehr. Tatsächlich kann die Lösung bei jeder Phasenzahl angewendet werden. Das Ausführungsbeispiel wird für den Fall eines m-Phasen-Generators mit einem 3-Phasen-Netzwerk (n = 3), verbunden durch den Matrix-Konverter, beschrieben. Die angegebene Generator-Konfiguration für 12 Phasen des Mehrphasen-Wechselstroms 6 und für 3 Phasen des gewünschten Ausgangs-Wechselstroms ist einem Standard Synchron-AC-Generator des Standes der Technik sehr ähnlich. Der Unterschied liegt in den Endwicklungsverbindungen der Statorstäbe, welche modifiziert werden müssen.

Zunächst werden die umlaufenden Ringe, welche die Spulen mit den Anschlussklemmen verbinden, entfernt. Die Enden der Stäbe, welche mit den umlaufenden Ringen verbunden waren, werden zusammengeschweisst, so wie jeder Stab, welcher die Spulen bildet.

Dadurch ist die Stator-Wicklung voll symmetrisch und bildet eine einzige geschlossene Spule. Tatsächlich gibt es keine speziellen Anschluss-Stücke mehr zwischen den Phasen. Ausserdem gibt es keinen Bedarf mehr, die ersten und letzten Stäbe der Wicklungen speziell auszubilden.

Zum Zweiten werden einige oder möglicherweise alle der geschweissten Verbindungen mit einem bidirektionalen Schalter 4 verbunden. Die resultierende erscheinende Phasenzahl m des Mehrphasen-Wechselstroms könnte 3, 4, 5, 6... bis zur Anzahl der Stäbe betragen, d.h. zweimal die Anzahl der Schlitze, wenn sowohl das angetriebene als auch das nicht-angetriebene Ende mit Schaltern ausgerüstet werden.

Im Prinzip kann jeder Standard-Generator modifiziert werden, um mit der neuen Konfiguration verwendet zu werden.

Normalerweise sind AC-Generatoren sternverbunden, aber in diesem Fall ist der Generator Delta-verbunden. Die Stator-Konfiguration hat einige Ähnlichkeit mit der Rotorwicklung eines DC-Motors.

Das grundlegende Betriebsprinzip in einem solchen Aufbau bleibt gleich und wird für eine grosse Anzahl von Phasen angewendet.

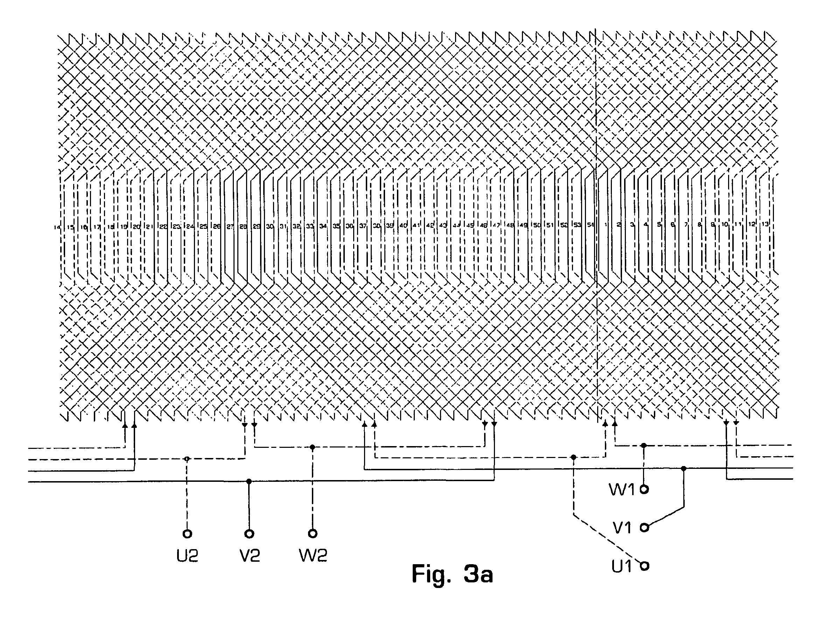

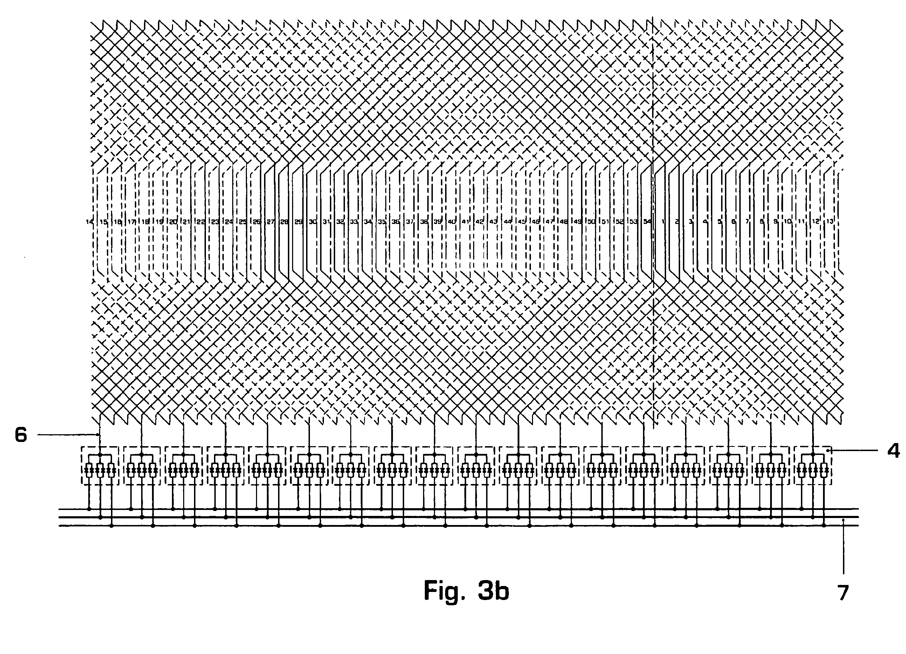

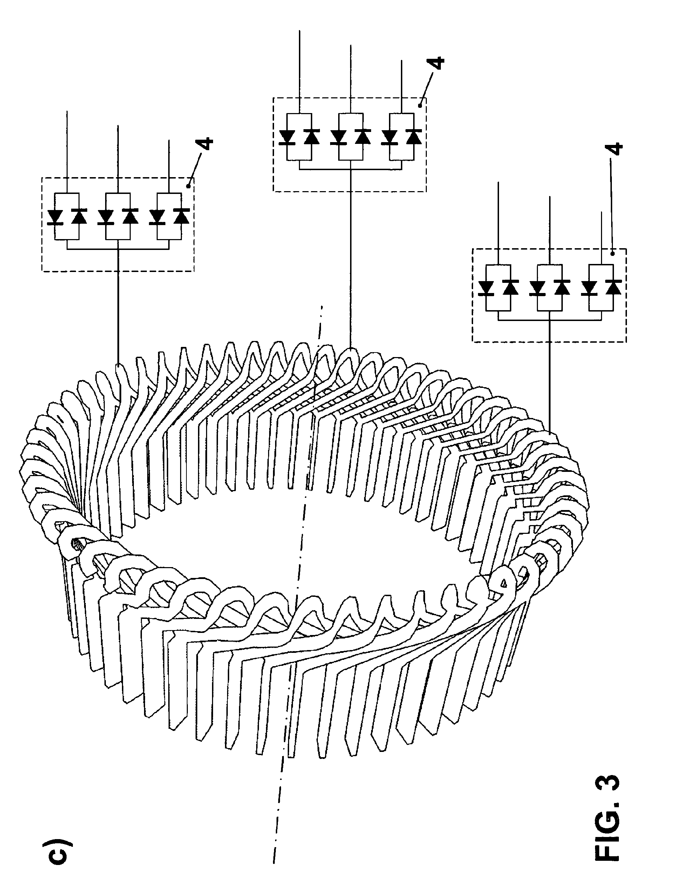

Das vorliegende Konzept ist auch besonders geeignet für das Repowering eines Stators. Dies kann aus Figur 3 erkannt werden. Figur 3a) zeigt die Standard-Konnektivität eines sternverbundenen Stators mit 54 Statorschlitzen, verbunden unter Ausbildung von 6 Phasen des Mehrphasen-Wechselstroms 6. Diese Phasen sind in Figur 3 mit U1, V1, W1 und U2, V2, W2 angegeben. Jeder der Statorschlitze ist mit zwei Statorstäben versehen.

Wie dies durch die Konnektivität in Figur 3b) angegeben ist, kann ein solcher Stator in einen Delta-verbundenen Stator nach der Erfindung umgewandelt werden, indem dort, wo vorher die Phasen des Mehrphasen-Wechselstroms 6 verbunden waren, benachbarte Ausgänge verbunden werden. Mit anderen Worten werden diese Verbindungen an den Stellen in der Figur 3a) überbrückt, wo zwei schwarze Punkte unmittelbar benachbart zueinander angeordnet sind. Nun werden die Evolventen einzeln mit einem Satz von bidirektionalen Schaltern verbunden. Wenn ein 54-Phasen-Ausgang gewünscht ist, wird jede Evolvente mit einem bidirektionalen Schalter verbunden. In Figur 3b) wird nur jede dritte Evolvente mit einem Satz von bidirektionalen Schaltern verbunden, was zu einem Mehrphasen-Wechselausgang mit 18 Phasen führt. Diese 18 Phasen sind mittels eines Satzes von bidirektionalen Schaltern mit den Linien des Ausgangs-Wechselstroms verbunden. Die Sammelschienen zwischen dem Mehrphasen-Stator und dem Matrix-Konverter haben einen ziemlich niedrigen Betriebszyklus, invers proportional zur Phasenanzahl, und entsprechend können die Sammelschienen herunterskaliert werden. Anstelle von Sammelschienen-Stäben können Standard-Mittelspannungskabel verwendet werden, was eine wesentlich Kostenreduktion zur Folge hat.

Figur 3c) zeigt in schematischer Weise, wie die Endwicklungsregion eines Stators mit Stabwicklungen aussieht, und wo die Ausgangsphasen von den äussersten Abschnitten der Evolventen abgegriffen werden. Zu diesem Zweck sind bei einigen der Evolventen symbolisch Sätze von bidirektionalen Schaltern eingezeichnet. Ebenfalls sichtbar in Figur 3c) ist die Tatsache, dass ein Stator, welcher gemäss der Erfindung modifiziert wurde, voll symmetrisch ist.

Infolge der grossen Anzahl von Phasen wird die scheinbare Kommutierungs-Frequenz hoch sein. Die erzeugten Harmonischen auf der Spannung werden bei höherer Frequenz auftreten und niedrigere Amplitude aufweisen. Der entsprechende harmonische Strom wird wegen der Phaseninduktivität des Generators weiter reduziert.

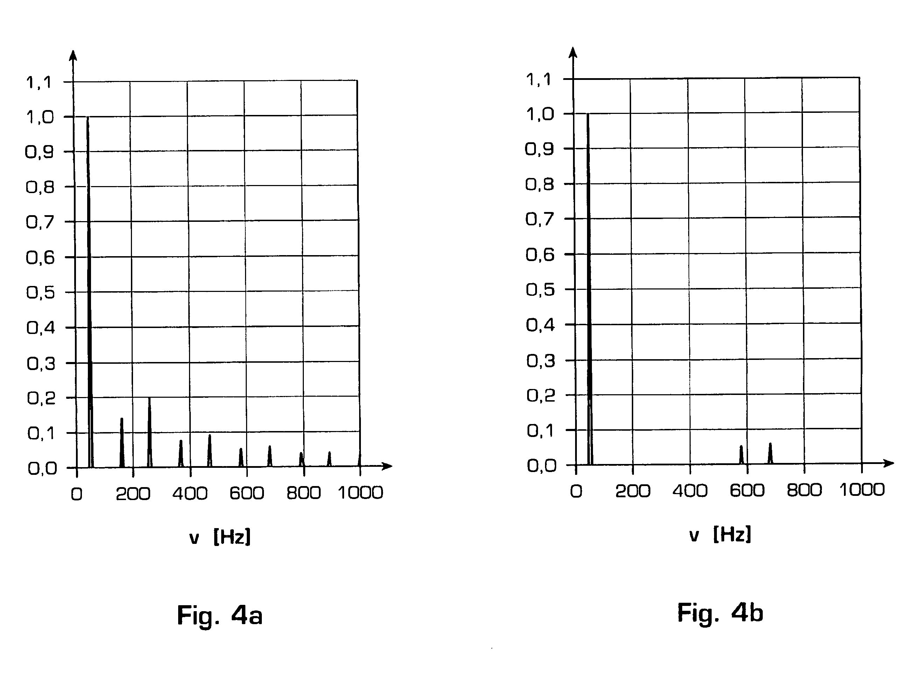

Die Graphiken wie in Figur 4 angegeben zeigen das theoretische Spektrum mit einem 6-Phasen (a), und einem 18-Phasen (b) Generator (z.B. einen wie in Figur 3b schematisch dargestellt). In Figur 4a) kann erkannt werden, dass für 6 Phasen des Mehrphasen-Wechselstroms bei den Harmonischen erster Ordnung Harmonische mit einer Amplitude von 14 % und von 20% bei den Harmonischen zweiter Ordnung erhalten werden.

Ein deutlich überlegenes Verhalten wird für 18 Phasen des Mehrphasen-Wechselstroms (b) erreicht, mit weniger als 10% bei den Harmonien fünfter und sechster Ordnung.

Die Anzahl von Kommutierungen pro Zeiteinheit wird proportional zur Phasenzahl zunehmen, d.h. die Zeit, welche zwischen Kommutierungen zur Verfügung bleibt, wird proportional zur Phasenzahl abnehmen. Gleichzeitig wird die Dauer der Kommutierung im gleichen Verhältnis abnehmen, da die beim Schaltvorgang involvierte Induktivität oder die Energie wesentlich niedriger ist. Am Ende wird die Gesamtzeit für Kommutierungen gleich sein, unabhängig von der Zahl der aktuell verwendeten Phasen.

Die aktuelle Phasenzahl kann während des Betriebs dynamisch geändert werden. Es soll ein Generator mit 54 Schlitzen betrachtet werden, welcher mit 3 x 54 bidirektionalen Schaltern 4 ausgestattet wird. Er kann als 4, 6, 9, 12, 18, 27, 36 oder 54 Phasen-Generator für symmetrische Operation betrieben werden. Im Falle eines Ausfalls eines Schalters kann jede dazwischenliegende Phasenzahl verwendet werden, mit begrenztem Einfluss auf die Arbeitsleistung beim Betrieb. Der Wechsel in der Phasenzahl wird durch die Steuerungssoftware des Matrix-Konverters bewirkt. Im Falle eines Ausfalls eines Schalters kann das System dennoch betrieben werden, sofern der defekte Schalter entfernt wird.

Mit dem vorgeschlagenen Wicklungs-Schema ist der Strom in einem gegebenen Stab des Stators während der meisten Zeit eine reale Sinuswelle. Der Arbeitszyklus der Statorwicklung ist hoch. Die Kommutierungen resultieren in einer sehr lokalen Modifikation des Musters des magnetischen Feldes. Entsprechend wird die Ankerwirkung sehr nahe bei jener eines Synchron-Generators liegen.

Wenn ein Generator 1 über einen statischen Frequenz-Konverter betrieben wird, ist die Dämpferwicklung des Rotors normalerweise einer grossen Last ausgesetzt, welche die normale negative Sequenz, wie in Vorschriften wie IEC 34-4 spezifiziert, überschreitet. Die vorgeschlagene Konfiguration tut dies nicht, und dementsprechend genügt eine Standard-Rotordämpfungswicklung.

Die "Ventile", d.h. die Schalter (Thyristoren, IGBT, IGCT, GTO...) sind zahlreich. Das neue Konzept gibt eine grosse Flexibilität, um die individuelle Auslegung und die Kosten der "Ventile" zu optimieren. Der Punkt ist, dass die "Ventile" bei der gepulsten Betriebsweise permanent in Betrieb sein werden.

Die gepulste Betriebsweise erlaubt es, ziemlich grosse Ströme aber mit einem niedrigen Arbeitszyklus zu haben, was genau der geplanten Anwendung entspricht.

BEZUGSZEICHEN-LISTE

| | |
|---|---|
| 1 | Generator |
| 2 | Stern-Punkt, Stem-Verbindung |
| 3 | Matrix-Konverter |
| 4 | Bidirektionaler Schalter |
| 5 | Transformator |
| 6 | Mehrphasen-Wechselstrom |
| 7 | Ausgangs-Wechselstrom |
| G1 - G6 | Generatorphase |
| L1 - L3 | Phase einer Last (Netz) |
| m | Anzahl der Phasen des Mehrphasen-Stators |
| n | Anzahl der Phasen des Wechselstroms auf dem Netz, der Last oder der Hauptversorgung |

**Patentansprüche**

1. Vorrichtung zur Erzeugung von elektrischer Leistung aus mechanischer Leistung, enthaltend einen Generator (1) mit einem Rotor und einem Stator für die Umwandlung von mechanischer Leistung in einen Mehrphasen-Wechselstrom (6),

   • wobei der Stator einen Statorkem mit einer zylindrischen Statorbohrung umfasst, wobei der Statorkern eine Vielfalt von beabstandeten parallelen Statorschlitzen aufweist, welche sich axial entlang der Länge des Statorkerns erstrecken und sich zur Statorbohrung hin öffnen, wobei eine Vielzahl von Statorwicklungs-Stäben in die Statorschlitze eingeführt ist,
   • wobei die Wicklungen des Stators, welche die Phasen des Mehrphasen-Wechselstroms (6) erzeugen, Delta-verbunden sind, und

• wobei der Mehrphasen-Wechselstrom (6) mehr als drei Phasen aufweist,

**dadurch gekennzeichnet, dass**
die Vorrichtung weiterhin einen statischen Frequenz-Konverter zur Konversion des Mehrphasen-Wechselstroms (6) in einen gewünschten Ausgangs-Wechselstrom (7) aufweist, welcher als Matrix-Konverter (3) ausgebildet ist, und dass es sich beim Stator um einen polygonalen Stator handelt, bei welchem die externen Wicklungsverbindungen überbrückt sind und die Eingänge des Matrix-Konverters (3) mit den Endverbindungen der Stäbe verbunden sind, indem bei k Statorschlitzen und einem Mehrphasen-Ausgang mit m Phasen jede k/m-te Endverbindung der Wicklungsstäbe oder Evolventen unter Ausbildung einer Phase des Mehrphasen-Statorausgangs verbunden ist.

2. Vorrichtung nach Anspruch 1, wobei der gewünschte Ausgangs-Wechselstrom (7) 3 oder 6 Phasen (n) aufweist, und wobei der Mehrphasen-Wechselstrom (6) mehr als 8 Phasen (m) aufweist.

3. Vorrichtung nach Anspruch 2, wobei die Anzahl der Phasen (m) des Mehrphasen-Wechselstroms (6) ein Vielfaches von 3 ist.

4. Vorrichtung nach einem der vorhergehenden Ansprüche, wobei der Mehrphasen-Wechselstrom (6) 9, 12, 18, 21 oder 24 Phasen (m) aufweist.

5. Vorrichtung nach einem der vorhergehenden Ansprüche, **dadurch gekennzeichnet, dass** in jedem Statorschlitz ein oder zwei Statorwicklungs-Stäbe angeordnet sind.

6. Vorrichtung nach einem der vorhergehenden Ansprüche, **dadurch gekennzeichnet, dass** im Matrix-Konverter (3) m Phasen des Mehrphasen-Wechselstroms (6) des Generators (1) in Ausgangs-Wechselstrom (7) mit n (n < m) Phasen (L1,....L3) einer Last mittels einer Vielzahl von in einer (m x n) Matrix angeordneten, steuerbaren, bidirektionalen Schaltern (4) konvertiert werden, so dass jede der m Phasen des Mehrphasen-Wechselstroms (6) mit jeder der n Phasen des Ausgangs-Wechselstroms über wenigstens einen bidirektionalen Schalter (4) verbunden ist

7. Vorrichtung nach Anspruch 6, **dadurch gekennzeichnet, dass** die bidirektionalen Schalter (4) durch ein Kontrollsystem gesteuert werden, welches in ausgewählter Weise m Eingänge mit n Ausgängen verbindet, wobei erste Mittel zur Bestimmung des Vorzeichens der Ströme der Eingänge und zweite Mittel zur Bestimmung der Vorzeichen der Spannungen zwischen den Eingängen vorgesehen sind, und wobei die ersten und zweiten Mittel in aktiver Verbindung mit dem Kontrollsystem stehen.

8. Vorrichtung nach Anspruch 6 oder 7, **dadurch gekennzeichnet, dass** die bidirektionalen Schalter (4) mit dem Kontrollsystem über eine Signallinie verbunden sind, über welche Information betreffend den Schaltzustand der Schalter an das Kontrollsystem übermittelt wird.

9. Vorrichtung nach einem der Ansprüche 6 bis 8, **dadurch gekennzeichnet, dass** die bidirektionalen Schalter (4) antiparallel geschaltete Thyristoren oder entsprechend angeordnete IGBTs, IGCT's oder GTO's umfassen.

10. Vorrichtung nach einem der vorhergehenden Ansprüche, **dadurch gekennzeichnet, dass** der Matrix-Konverter (3) wenigstens teilweise in den Stator des Generators integriert ist

11. Vorrichtung nach Anspruch 10, **dadurch gekennzeichnet, dass** der Teil des Matrix-Konverters (3), welcher im Stator enthalten ist, in der Strömung des zur Kühlung des Generators verwendeten Kühlmittels angeordnet ist.

12. Vorrichtung nach einem der vorhergehenden Ansprüche, **dadurch gekennzeichnet, dass** die Anzahl der Phasen (m) des Mehrphasen-Wechselstroms (6) der Zahl der Statorschlitze entspricht.

13. Verfahren zum Betrieb einer Vorrichtung nach einem der vorhergehenden Ansprüche, mit einem Matrix-Konverter (3) in welchem m Phasen des Mehrphasen-Wechselstroms (6) des Generators (1) in Ausgangs-Wechselstrom mit n (n < m) Phasen (L1,..., L3) einer Last konvertiert werden durch ein abwechselndes Verbinden dieser Phasen über eine Vielzahl von steuerbaren bidirektionalen Schaltern (4), welche in einer (m x n) Matrix angeordnet sind, wobei n Phasen des Generators (1) immer mit der Last verbunden sind, während (m-n) Phasen des Generators (1) nicht mit der Last verbunden sind, **dadurch gekennzeichnet, dass**
ein Schalten von einer ausgewählten verbundenen Phase ($G_k$) des Generators (1) zu einer ausgewählten nicht verbundenen Phase ($G_l$) des Generators (1) nur dann stattfindet, wenn die Bedingung

$$I_k \cdot (V_k - V_l) \cdot K_{ijkl} < 0$$

erfüllt wird, wobei $I_k$ und $V_k$ der Strom und die Spannung der ausgewählten verbundenen Phase ($G_k$) sind, $V_l$ die Spannung der ausgewählten nicht verbundenen Phase ($G_l$) ist, und für jeden Schaltvor-

gang K$_{ijkl}$ eine charakteristische Konstante für die wechselseitige Induktivität zwischen den Phasen (G$_{l,...}$, G$_m$) des Generators (1) und der Induktivität der Last ist.

14. Verfahren zum Repowering eines sternverbundenen Stators, **dadurch gekennzeichnet, dass** der Stator einen Statorkern mit einer darin vorgesehenen zylindrischen Statorbohrung umfasst, dass der Statorkern eine Vielzahl von beabstandeten parallelen Statorschlitzen aufweist, welche sich axial entlang der Länge des Statorkerns erstrecken, und welche sich zur Statorbohrung hin öffnen, wobei eine Vielzahl von Statorwicklungsstäben in die Statorschlitze eingeführt ist, umfassend folgende Schritte

- Überbrückung der externen Wicklungsverbindungen des Stators und
- Verwendung der Endverbindungen der Wicklungsstäbe als Mehrphasen-Statorausgang, dass ein statischer Frequenz-Konverter, vorzugsweise ein Matrix-Konverter, direkt mit den Endverbindungen der Wicklungsstäbe verbunden wird, vorzugsweise **dadurch**, dass Sätze von bidirektionalen Schaltern unter Ausbildung eines Matrix-Konverters direkt mit den Endverbindungen der Wicklungsstäbe verbunden werden, dass der Stator k Statorschlitze aufweist, dass der Mehrphasen-Ausgang m Phasen aufweist, und dass jede k/m-te Endverbindung der Wicklungsstäbe oder Evolventen unter Ausbildung einer Phase des Mehrphasen-Statorausgangs verbunden Ist.

15. Verfahren nach Anspruch 14, **dadurch gekennzeichnet, dass** die die Spulen mit den Anschlussklemmen verbindenden umlaufenden Ringe entfernt werden, und dass die Stabenden, welche zuvor mit den umlaufenden Ringen verbunden waren, zusammengeschweisst werden.

**Claims**

1. Apparatus for producing electrical power from mechanical power, containing a generator (1) with a rotor and a stator for conversion of mechanical power to a polyphase alternating current (6),

• with the stator having a stator core with a cylindrical stator bore, with the stator core having a multiplicity of parallel stator slots at a distance from one another, which extend axially along the length of the stator core and are open towards the stator bore, with a multiplicity of stator winding bars being inserted into the stator slots,
• with the windings of the stator which produce the phases of the polyphase alternating current (6) being delta-connected, and
• with the polyphase alternating current (6) having more than three phases,

**characterized in that**
the apparatus also has a static frequency converter for conversion of the polyphase alternating current (6) to a desired output alternating current (7), which converter is in the form of a matrix converter (3), and **in that** the stator is a polygonal stator, in which the external winding connections are bridged, and the inputs to the matrix converter (3) are connected to the end connections of the bars, **in that**, when there are k stator slots and with a polyphase output with m phases, every k/m-th end connection of the winding bars or evolvent is connected, forming one phase of the polyphase stator output.

2. Apparatus according to Claim 1, wherein the desired output alternating current (7) has 3 or 6 phases (n), and wherein the polyphase alternating current (6) has more than 8 phases (m).

3. Apparatus according to Claim 2, wherein the number of phases (m) of the polyphase alternating current (6) is a multiple of 3.

4. Apparatus according to one of the preceding Claims, wherein the polyphase alternating current (6), has 9, 12, 18, 21 or 24 phases (m).

5. Apparatus according to one of the preceding Claims, **characterized in that** one or two stator winding bars is or are arranged in each stator slot.

6. Apparatus according to one of the preceding Claims, **characterized in that** m phases of the polyphase alternating current (6) of the generator (1) are converted in the matrix converter (3) to an output alternating current (7) with n (n < m) phases (L1,...L3) of a load by means of a multiplicity of bidirectional, controllable switches (4) which are arranged in an (m x n) matrix, such that each of the m phases of the polyphase alternating current (6) is connected to each of the n phases of the output alternating current via at least one bidirectional switch (4).

7. Apparatus according to Claim 6, **characterized in that** the bidirectional switches (4) are controlled by a monitoring system which connects m inputs to n outputs in a selected manner, wherein first means are provided for determining the mathematical sign of the currents at the inputs, and second means are provided for determining the mathematical signs of the voltages between the inputs, and wherein the first and second means are actively connected to the monitoring system.

**8.** Apparatus according to Claim 6 or 7, **characterized in that** the bidirectional switches (4) are connected to the monitoring system via a signal line, via which information relating to the switching state of the switches is transmitted to the monitoring system.

**9.** Apparatus according to one of Claims 6 to 8, **characterized in that** the bidirectional switches (4) comprise back-to-back parallel-connected thyristors or correspondingly arranged IGBTs, IGCTs or GTOs.

**10.** Apparatus according to one of the preceding Claims, **characterized in that** the matrix converter (3) is at least partially integrated in the stator of the generator.

**11.** Apparatus according to Claim 10, **characterized in that** the part of the matrix converter (3) which is contained in the stator is arranged in the flow of the coolant which is used to cool the generator.

**12.** Apparatus according to one of the preceding Claims, **characterized in that** the number of phases (m) of the polyphase alternating current (6) corresponds to the number of stator slots.

**13.** Method for operating an apparatus according to one of the preceding Claims, having a matrix converter (3) in which m phases of the polyphase alternating current (6) of the generator (1) are converted to an output alternating current with n (n < m) phases (L1,...L3) of a load by alternate connection of these phases via a multiplicity of controllable bidirectional switches (4), which are arranged in an (m x n) matrix, with n phases of the generator (1) always being connected to the load, while (m-n) phases of the generator (1) are not connected to the load, **characterized in that** switching from a selected connected phase $(G_k)$ of the generator (1) to a selected non-connected phase $(G_l)$ of the generator (1) takes place only when the condition

$$I_k \cdot (V_k - V_l) \cdot K_{ijkl} < 0$$

is satisfied, where $I_k$ and $V_k$ are the current and the voltage, respectively, of the selected connected phase $(G_k)$, $V_l$ is the voltage of the selected non-connected phase $(G_l)$, and, for each switching process, $K_{ijkl}$ is a characteristic constant for the mutual inductance between the phases $(G_l,...,G_m)$ of the generator (1) and the inductance of the load.

**14.** Method for repowering of a star-connected stator, **characterized in that** the stator has a stator core with a cylindrical stator bore provided in it, **in that** the stator core has a multiplicity of parallel stator slots at a distance from one another, which extend axially along the length of the stator core and which open towards the stator bore, with a multiplicity of stator winding bars being inserted into the stator slots, comprising the following steps:

- the external winding connections of the stator are bridged, and
- the end connections of the winding bars are used as a polyphase stator output, **in that** a static frequency converter, preferably a matrix converter, is connected directly to the end connections of the winding bars, preferably by sets of bidirectional switches being connected directly to the end connections of the winding bars, forming a matrix converter, **in that** the stator has k stator slots, **in that** the polyphase output has m phases, and **in that** every k/m-th end connection of the winding bars or evolvent is connected forming one phase of the polyphase stator output.

**15.** Method according to Claim 14, **characterized in that** the circumferential rings which connect the coils to the connecting terminals are removed, and **in that** the bar ends which were previously connected to the circumferential rings are welded together.

## Revendications

**1.** Dispositif de production d'énergie électrique à partir d'énergie mécanique, qui contient un générateur (1) doté d'un rotor et d'un stator pour convertir l'énergie mécanique en courant alternatif polyphasé (6),

- dans lequel le stator contient une âme de stator traversée par un alésage cylindrique de stator, l'âme de stator présentant plusieurs fentes de stator parallèles et situées à distance les unes des autres, qui s'étendent axialement sur la longueur de l'âme du stator et qui sont ouvertes sur l'alésage de stator, plusieurs barreaux d'enroulement de stator étant insérés dans les fentes de stator,
- les enroulements du stator qui produisent les phases du courant alternatif polyphasé (6) étant raccordés en triangle et
- le courant alternatif polyphasé (6) présentant plus de trois phases,

**caractérisé en ce que**
le dispositif présente en outre un convertisseur statique de fréquences qui convertit le courant alternatif polyphasé (6) en le courant alternatif de sortie (7) souhaité et qui est configuré comme convertisseur matriciel (3), et **en ce que** le stator est un stator polygonal dont les liaisons externes des enroulements sont pontées, les entrées du convertisseur matriciel (3) étant reliées aux liaisons d'extrémité des barreaux, et dans le cas de k fentes de stator et d'une sortie polyphasée à m phases, chaque liaison d'extrémité k/m des barreaux d'enroulement ou des développantes est raccordée pour former une phase de la sortie polyphasée du stator.

2. Dispositif selon la revendication 1, dans lequel le courant alternatif de sortie (7) souhaité présente 3 ou 6 phases (n) et le courant alternatif polyphasé (6) présente plus de 8 phases (m).

3. Dispositif selon la revendication 2, dans lequel le nombre de phases (m) du courant alternatif polyphasé (6) est un multiple de 3.

4. Dispositif selon l'une des revendications précédentes, dans lequel le courant alternatif polyphasé (6) présente 9, 12, 18, 21 ou 24 phases (m).

5. Dispositif selon l'une des revendications précédentes, **caractérisé en ce que** dans chaque fente de stator sont disposés un ou deux barreaux d'enroulement de stator.

6. Dispositif selon l'une des revendications précédentes, **caractérisé en ce que** dans le convertisseur matriciel (3), m phases du courant alternatif polyphasé (6) du générateur (1) sont converties en un courant alternatif de sortie (7) qui présente n phases (n < m) (L1, ..., L3) d'une charge, au moyen de plusieurs commutateurs bidirectionnels (4) asservis et disposés en une matrice (m x n) en reliant chacune des m phases du courant alternatif polyphasé (6) à chacune des n phases du courant alternatif de sortie par au moins un commutateur bidirectionnel (4).

7. Dispositif selon la revendication 6, **caractérisé en ce que** les commutateurs bidirectionnels (4) sont commandés par un système de contrôle qui relie de manière sélective m entrées à n sorties, des premiers moyens de détermination du signe du courant des entrées et des deuxièmes moyens de détermination du signe de la tension entre les entrées étant prévus, les premiers et les deuxièmes moyens étant reliés activement au système de contrôle.

8. Dispositif selon les revendications 6 ou 7, **caractérisé en ce que** les commutateurs bidirectionnels (4) sont reliés au système de contrôle par une ligne de signalisation par laquelle des informations concernant l'état de commutation des commutateurs sont transmises au système de contrôle.

9. Dispositif selon l'une des revendications 6 à 8, **caractérisé en ce que** les commutateurs bidirectionnels (4) comprennent des thyristors branchés en mode antiparallèle ou des IGBT, IGCT ou GTO disposés de manière appropriée.

10. Dispositif selon l'une des revendications précédentes, **caractérisé en ce que** le convertisseur matriciel (3) est intégré au moins en partie dans le stator du générateur.

11. Dispositif selon la revendication 10, **caractérisé en ce que** la partie du convertisseur matriciel (3) contenue dans le stator est disposée dans l'écoulement du fluide de refroidissement utilisé pour refroidir le générateur.

12. Dispositif selon l'une des revendications précédentes, **caractérisé en ce que** le nombre (m) des phases du courant alternatif polyphasé (6) correspond au nombre des fentes du stator.

13. Procédé de conduite d'un dispositif selon l'une des revendications précédentes, qui présente un convertisseur matriciel (3) dans lequel m phases du courant alternatif polyphasé (6) du générateur (1) sont converties en courant alternatif de sortie qui compte n phases (n < m) (L1, ..., L3) d'une charge par raccordement alterné de ces phases à l'aide de plusieurs commutateurs bidirectionnels asservis (4) disposés en matrice (m x n), n phases du générateur (1) étant toujours reliées à la charge tandis que (m - n) phases du générateur (1) ne sont pas reliées à la charge, **caractérisé en ce que** la commutation d'une phase sélectionnée $(G_k)$ reliée au générateur (1) à une phase sélectionnée $(G_j)$ non reliée au générateur (1) n'a lieu que si la condition :

$$I_k \cdot (V_k - V_l) \cdot K_{ijkl} < 0$$

est remplie, $I_k$ et $V_k$ représentant le courant et la tension de la phase reliée sélectionnée $(G_k)$, $V_l$ représentant la tension de la phase sélectionnée non reliée $(G_l)$, et pour chaque opération de commutation, $K_{ijkl}$ représente une constante caractéristique de l'inductance alternée entre les phases $(G_l, ..., G_m)$ du générateur (1) et l'inductance de la charge.

14. Procédé de transformation d'un stator raccordé en étoile, **caractérisé en ce que** le stator comprend une âme traversée par un alésage cylindrique de stator, **en ce que** l'âme de stator présente plusieurs fentes de stator parallèles, situées à distance les unes des autres, qui s'étendent axialement sur la longueur de l'âme du stator et qui sont ouvertes sur l'alésage de stator, plusieurs barreaux d'enroulement de stator étant insérés dans les fentes de stator, lequel procédé comprend les étapes qui consistent à :

  - ponter les liaisons externes entre les enroulements du stator et
  - utiliser une liaison d'extrémité des barreaux d'enroulement comme sortie polyphasée de stator,

**en ce qu'**un convertisseur statique de fréquences, de préférence un convertisseur matriciel, est relié directement aux liaisons d'extrémité des barreaux d'enroulement, de préférence en reliant directement des jeux de commutateurs bidirectionnels aux liaisons d'extrémité des barreaux d'enroulement pour former un convertisseur matriciel,
**en ce que** le stator présente k fentes de stator, **en ce que** la sortie polyphasée présente m phases et **en ce que** chaque liaison d'extrémité k/m des barreaux d'enroulement ou développantes est reliée pour former une phase de la sortie polyphasée du stator.

**15.** Procédé selon la revendication 14, **caractérisé en ce que** les bagues périphériques qui relient les bobines aux barreaux de raccordement sont enlevées et **en ce que** les extrémités de barres qui étaient précédemment reliées par les anneaux périphériques sont soudées ensemble.

G1   G2   G3   G4   G5   G6

Fig.1

EP 1 864 375 B1

Fig. 2a)

Fig. 2b)

Fig. 3a

**Fig. 3b**

c)

FIG. 3

Fig. 4b

Fig. 4a

**EP 1 864 375 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5594636 A
- DE 10051222 A1
- EP 1199794 A
- US 5053689 A
- DE 3123800 A
- DE 2630171
- US 5789840 A